# EUROPEAN PATENT APPLICATION

(11) **EP 4 621 917 A1**
(43) Date of publication of application: **24.09.2025**
(21) Application number: 24793132.2
(22) Date of filing: 17.04.2024
(51) Int. Cl.: H01M 10/0583, H01M 50/46, H01M 50/466, H01M 4/62

(54) **ELECTRODE ASSEMBLY AND METHOD FOR MANUFACTURING SAME**

(30) Priority: 21.04.2023 KR 20230052674
(71) Applicant: LG Energy Solution, Ltd., Seoul 07335 (KR)
(72) Inventor: KIM, Hye Won, Daejeon 34122 (KR); LEE, Ji Su, Daejeon 34122 (KR); SUNG, Dong Wook, Daejeon 34122 (KR); KA, Kyung Ryun, Daejeon 34122 (KR)
(74) Representative: Plasseraud IP
(86) International application number: PCT/KR2024/095750
(87) International publication number: WO 2024/219950

(57) **Abstract**

The present disclosure relates to an electrode assembly and a method of manufacturing the same, and particularly, to an electrode assembly which prevents the degradation of the lifespan of a battery according to Li-precipitation and a resistance rise by constructing the electrode assembly including a single-sided positive electrode and manufacturing the electrode assembly at low pressure and temperature, and a method of manufacturing the same.

## Description

### Technical Field

The present invention claims the benefit of Korean Patent Application No. 10-2023-0052674 filed in the Korean Intellectual Property Office on April 21, 2023, the entire contents of which are incorporated herein by reference.

The present disclosure relates to an electrode assembly and a method of manufacturing the same, and particularly, to an electrode assembly which prevents the degradation of the lifespan of a battery according to Li-precipitation and a resistance rise by constructing the electrode assembly including a single-sided positive electrode and manufacturing the electrode assembly at low pressure and temperature, and a method of manufacturing the same.

### Background Art

An electrochemical device is to convert chemical energy into electrical energy by using an electrochemical reaction. Recently, a lithium secondary battery having a high energy density and voltage and a long cycle lifespan and capable of being used in various fields is widely used. As the demand for electric vehicles and energy storage devices are recently increased, a material and structure for maximizing the capacity and energy density are developed.

A secondary battery may include an electrode assembly including a positive electrode, a negative electrode, and a separator disposed between the positive electrode and the negative electrode. The electrode assembly may be manufactured by being received in a case along with an electrolyte. The secondary batteries may be classified into a pouch type, a cylindrical type, a prismatic type, a coin type, etc. depending on a shape of the case in which the electrode assembly is received, and may be classified into a jelly-roll type, a stack type, etc. depending on a method of manufacturing an electrode assembly or a shape of the electrode assembly.

An electrode assembly using a zigzag stacking (ZZS) method of alternately disposing a positive electrode and a negative electrode between adjacent curves while bending a separator having a long sheet shape in a zigzag shape has recently been developed. For example, the zigzag-shaped electrode assembly may be manufactured in a way to dispose each electrode between long sheet-shaped separators by tilting or swinging a table in which the electrode assembly is stacked or folding the separator in zigzags by performing a reciprocating motion on a supply roll that transfers the separator, when the separator wound on a cylinder is supplied. The zigzag stacking has an advantage in that productivity is excellent because a process is simple compared to another type.

Meanwhile, one of methods for increasing the energy density of a battery is a method of disposing single-sided positive electrodes at both ends of a battery. However, in order to assemble the single-sided positive electrodes, the single-sided positive electrodes need to be pressed for a long time at very high pressure and temperature because the single-sided positive electrode is severely curled. In such a case, pores of the electrode and a separator may be clogged due to the high pressure and temperature. There are problems in a battery wettability failure and a resistance rise. Moreover, if a battery is manufactured under weak conditions, single-sided positive electrodes at both ends of the battery are curled. The lifespan of the battery is degraded due to Li-precipitation and a resistance rise of a corresponding portion because the electrodes are spaced apart from each other as the cycle is repeated.

Accordingly, there is a need for a method for solving the problem even under low pressure and temperature conditions while using a single-sided positive electrode.

### DISCLOSURE

### Technical Problem

A technical object to be achieved by the present disclosure is to provide an electrode assembly which prevents the degradation of the lifespan of a battery according to Li-precipitation and a resistance rise by constructing the electrode assembly including a single-sided positive electrode and manufacturing the electrode assembly at low pressure and temperature, and a method of manufacturing the same.

However, objects to be achieved by the present disclosure are not limited to the aforementioned object, and the other objects not described above may be evidently understood from the following description by those skilled in the art.

### Technical Solution

An embodiment of the present disclosure provides an electrode assembly including a single-sided positive electrode provided at both ends thereof and a unit electrode assembly provided between the single-sided positive electrodes and including a first separator provided between the single-sided positive electrode and the unit electrode assembly. The unit electrode assembly includes (n+1) negative electrodes and n positive electrodes alternately disposed between 2n second separators (n is a positive integer). A bonding coating layer including a first polymer binder is provided at at least a part of an outskirt part of a surface of the single-sided positive electrode, which faces the first separator.

According to an embodiment of the present disclosure, the first separator and the second separator may be formed from one separator that has been folded in zigzags.

According to an embodiment of the present disclosure, the area of the bonding coating layer provided in the single-sided positive electrode may be 10% or more to 20% or less with respect to the entire area of the surface of the single-sided positive electrode, which faces the first separator.

According to an embodiment of the present disclosure, the thickness of the bonding coating layer may be 10% or more to 100% or less with respect to the thickness of the first separator.

According to an embodiment of the present disclosure, the entire surface of the single-sided positive electrode, which faces the first separator, may include the bonding coating layer in a predetermined pattern.

According to an embodiment of the present disclosure, the first polymer binder may be polyvinylidene-based resin.

According to an embodiment of the present disclosure, the first polymer binder may be a copolymer of polyvinylidenepropylene and hexafluoropropylene.

According to an embodiment of the present disclosure, in the first polymer binder, a replacement rate of the hexafluoropropylene may be 20% or more.

According to an embodiment of the present disclosure, the single-sided positive electrode may include a second polymer binder. The separator may include a porous coating layer provided on at least one surface thereof and including a third polymer binder and inorganic matter particles. Each of the second polymer binder and the third polymer binder provided in the single-sided positive electrode and the porous coating layer may be identical with the first polymer binder included in the bonding coating layer.

An embodiment of the present disclosure provides a method of manufacturing an electrode assembly, including steps of providing 2n second separators between first separators at both ends thereof, preparing a stack body in which (n+1) negative electrodes and n positive electrodes are provided between the first separators and the second separators so that the (n+1) negative electrodes and the n positive electrodes are alternated and a single-sided positive electrode including a bonding coating layer at an outskirt part is provided on the first separator at each of the both ends, and manufacturing an electrode assembly by applying heat and pressure to the stack body.

According to an embodiment of the present disclosure, the step of manufacturing the electrode assembly may include assembling the electrode assembly at a temperature less than 90°C and pressure less than 6.5 MPa.

According to an embodiment of the present disclosure, the step of providing the separator may include providing the separator while folding one separator in zigzags.

### Advantageous Effects

The electrode assembly according to an embodiment of the present disclosure can prevent the degradation of the lifespan of a battery according to Li-precipitation and a resistance rise although the electrode assembly is assembled at low pressure and temperature because the electrode assembly includes the single-sided positive electrodes each including the bonding coating layer.

The method of manufacturing an electrode assembly according to an embodiment of the present disclosure can prevent the degradation of the lifespan of a battery according to Li-precipitation and a resistance rise by manufacturing the electrode assembly at low pressure and temperature and can increase the ease of manufacturing by reducing a battery manufacturing time.

### Brief Description of Drawings

FIG. 1 is a schematic diagram of an electrode assembly of a Comparative Example.
FIG. 2 is a schematic diagram of Li precipitation that occurs in a single-sided positive electrode of Comparative Example 2.
FIG. 3 is a schematic diagram of a single-sided positive electrode including a bonding coating layer according to an embodiment of the present disclosure.
FIG. 4 is a schematic diagram of an electrode assembly according to an embodiment of the present disclosure.

### Best Mode

In this specification, when it is said that a part "includes" a component, it means that another component is not excluded, but another component may be further included, unless explicitly described to the contrary.

In this specification, "A and/or B" means "A and B, or A or B".

The term "include" used in this specification is used to list materials, compositions, devices, and methods which are useful in the present disclosure, and is not limited to a listed example thereof.

In this specification, when it is said that one component is provided "on" the other component, it means that another component may be further disposed without excluding that another component is disposed between the two components, unless explicitly described to the contrary.

Hereinafter, embodiments of the present disclosure are described in detail with reference to the accompanying drawings. The drawings may be exaggerated or omitted or schematically illustrated in order to describe or highlight the contents of an embodiment of the present disclosure.

An embodiment of the present disclosure provides an electrode assembly 100, including single-sided positive electrodes 110 and a unit electrode assembly 130 provided between the single-sided positive electrodes 110 that are provided at both ends of the electrode assembly and including a first separator 111 provided between the single-sided positive electrode 110 and the unit electrode assembly 130. In the unit electrode assembly 130, (n+1) negative electrodes 135 and n positive electrodes 137 are alternately disposed between 2n second separators 133 (n is a positive integer). At least a part of an outskirt part of a surface of the single-sided positive electrode 110, which faces the first separator 111, includes a bonding coating layer 113 including a first polymer binder.

The electrode assembly according to an embodiment of the present disclosure can prevent the degradation of the lifespan of a battery according to Li-precipitation and a resistance rise although the electrode assembly is assembled at low pressure and temperature because the electrode assembly includes the single-sided positive electrodes each including the bonding coating layer and the single-sided positive electrode has bonding strength.

According to an embodiment of the present disclosure, the unit electrode assembly may be manufactured by thermally compressing a stack body in which a positive electrode and a negative electrode have been alternately disposed between the separators folded in zigzags.

According to an embodiment of the present disclosure, the separator (means the first separator 111 and/or the second separator 133) may mean a functional separator in which a porous coating layer including an inorganic matter and a binder (a third polymer binder) has been formed on at least one surface of a polyolefin base or a porous polymer base, such as non-woven fabric, but the present disclosure is not limited thereto. The separator may denote a freestanding separator formed of an inorganic matter and a binder (the third polymer binder) without a porous polymer base.

According to an embodiment of the present disclosure, the separator (means the first separator and/or the second separator) provides a pore capable of transmitting lithium ions while preventing a short-circuit by electrically insulating the positive electrode and the negative electrode. The separator may have tolerance against an electrolyte of an electrochemical device, that is, an organic solvent. For example, the separator may include a porous polymer base. Specifically, the porous polymer base may include polymer resin, such as polyolefin series such as polyethylene, polypropylene, and polybutene, polyvinyl cloride, polyethylene terephthalate, polycycloolefin, polyethersulfone, polyamide, polyimide, polyimideamide, polyaramide, polycycloolefin, nylon, polytetrafluoroethylene, and a copolymer or mixture of them, but the present disclosure is not limited thereto.

According to an embodiment of the present disclosure, the porous coating layer may be formed on at least one surface of the separator (means the first separator and/or the second separator) by applying and drying slurry. The slurry may include the polymer binder (the third polymer binder), inorganic matter particles, a dispersion medium, etc. The porous coating layer may include inorganic matter particles for improving mechanical properties and insulating property of the separator and a polymer binder for improving bonding strength between the electrode and the separator. The polymer binder may provide bonding strength between the electrode and the separator, and may also combine the inorganic matter particles that neighbor each other and may maintain the combination. The inorganic matter particles may provide an interstitial volume, that is, a pore between the inorganic matter particles by combining the neighbor inorganic matter particles, and lithium ions may move through the interstitial volume.

According to an embodiment of the present disclosure, an acrylic binder, fluorine-based binder, etc., which are known in the art, may be used as the polymer binder (the third polymer binder). As will be described later, the polymer binder (the third polymer binder) may be preferably a fluorine-based binder.

According to an embodiment of the present disclosure, the inorganic matter particles may have one or more of characteristics, such as the ability to transfer lithium ions, piezoelectricity, and flame resistance. Inorganic matter particles that are known in the art may be used as the inorganic matter particles. Specifically, the inorganic matter particles may be one selected from a group consisting of BaSO₄,BaTiO₃, Pb(Zr, Ti) O₃ (PZT), b1-xLaxZr1-yTi_{y}O₃ (PLZT, 0<x<1, 0<y<1), Pb(Mg_{1/3}Nb_{2/3})O₃-PbTiO₃(PMN-PT) , hafnia (HfO₂) , SrTiO₃, SnO₂, CeO₂, MgO, Mg(OH)₂, NiO, CaO, ZnO, ZrO₂, SiO₂, Y₂O₃, Al₂O₃, SiC, Al (OH)₃, TiO₂, aluminum peroxide, zinc tin hydroxide (ZnSn(OH)₆), tin-zinc oxide (Zn₂SnO₄, ZnSnO₃), antimony trioxide (Sb₂O₃), antimony tetroxide (Sb₂O₄), antimony penta-oxide (Sb₂O₅), boehmite (AlO(OH)), and a combination of them, but this is merely an example and the present disclosure is not limited thereto.

According to an embodiment of the present disclosure, a total content of the inorganic matter particles may be greater than 75 parts by weight with respect to 100 parts by weight of the bonding coating layer, but the present disclosure is not limited thereto.

According to an embodiment of the present disclosure, the unit electrode assembly 130 has the (n+1) negative electrodes 135 and the n positive electrodes 137 alternately disposed between the 2n second separators 133 (n is a positive integer). Specifically, the 2n second separators 133 are constructed because the second separators 133 are bonded to both surfaces of the positive electrode 137 and the negative electrode 135. Furthermore, since the single-sided positive electrodes 110 adjacent to the first separators 111 are provided at both ends of the electrode assembly 100, the negative electrodes 135 are disposed at both ends of the unit electrode assembly 130 that is provided between the single-sided positive electrodes 110 provided at both ends of the electrode assembly 100. Accordingly, the unit electrode assembly 130 has the (n+1) negative electrodes 135 and the n positive electrodes 137 alternately disposed therein.

According to an embodiment of the present disclosure, each of the positive electrode and the negative electrode may mean an electrode in which an electrode active material has been applied on at least one surface of a material that has conductivity while not causing a chemical change in an electrochemical device and dried. The material and the electrode active material are not limited to any type as long as the material and the electrode active material can be used in an electrochemical device.

According to an embodiment of the present disclosure, the thickness of the positive electrode 137 may be 90 *µ*m or more to 130 *µ*m or less. Specifically, the thickness of the positive electrode may be 90 *µ*m or more to 125 *µ*m or less, 90 *µ*m or more to 120 *µ*m or less, 90 *µ*m or more to 115 *µ*m or less, 90 *µ*m or more to 110 *µ*m or less, or 95 *µ*m or more to 105 *µ*m or less. By adjusting the thickness of the positive electrode in the aforementioned range, the assembly easiness of the electrode assembly can be increased, a desired capacity of a battery can be secured, and the degradation of performance of the battery can also be prevented.

According to an embodiment of the present disclosure, the thickness of the negative electrode 135 may be 100 *µ*m or more to 150 *µ*m or less. Specifically, the thickness of the negative electrode may be 105 *µ*m or more to 145 *µ*m or less, 110 *µ*m or more to 140 *µ*m or less, 115 *µ*m or more to 135 *µ*m or less, 120 *µ*m or more to 135 *µ*m or less, or 125 *µ*m or more to 135 *µ*m or less. By adjusting the thickness of the negative electrode in the aforementioned range, the assembly easiness of the electrode assembly can be increased, a desired capacity of a battery can be secured, and the degradation of performance of the battery can also be prevented.

According to an embodiment of the present disclosure, the thickness of the single-sided positive electrode 110 may be 50 *µ*m or more to 70 *µ*m or less. Specifically, the thickness of the single-sided positive electrode may be 55 *µ*m or more to 65 *µ*m or less. By adjusting the thickness of the single-sided positive electrode in the aforementioned range, the assembly easiness of the electrode assembly can be increased, and the degradation of performance of the battery can be prevented.

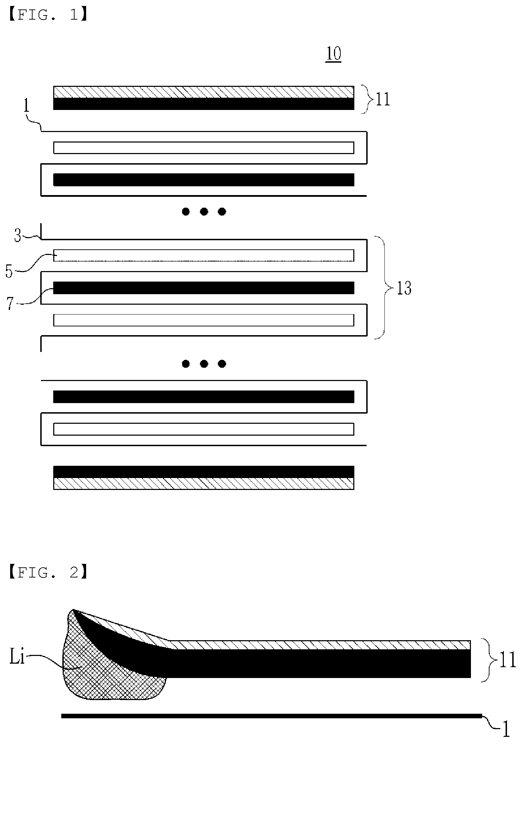

According to an embodiment of the present disclosure, the bonding coating layer including the first polymer binder is provided at at least a part of the outskirt part of the surface of the single-sided positive electrode, which faces the first separator. FIG. 1 is a schematic diagram of an electrode assembly 10 of a Comparative Example. Referring to FIG. 1, the bonding coating layer is not provided on a single-sided positive electrode 11. FIG. 2 is a schematic diagram of Li precipitation that occurs in the single-sided positive electrode 11 of Comparative Example 2. Referring to FIG. 2, the bonding coating layer is not provided on the single-sided positive electrode. If a battery is manufactured under weak conditions, the single-sided positive electrodes at both ends of the battery are curled. The degradation of the lifespan of a battery according to Li-precipitation and a resistance rise of a corresponding portion occur as the electrode and the electrode are spaced apart from each other as the cycle is repeated.

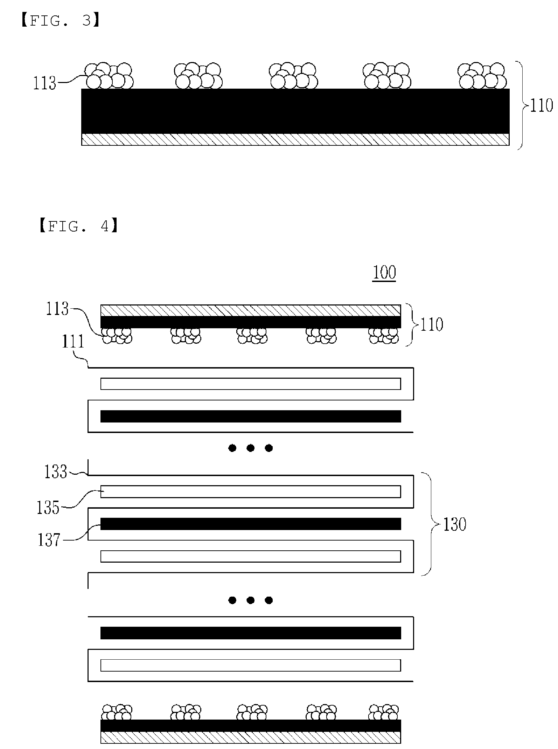

Meanwhile, FIG. 3 is a schematic diagram of the single-sided positive electrode 110 including the bonding coating layer 113 of Example 1 according to an embodiment of the present disclosure. FIG. 4 is a schematic diagram of the electrode assembly 100 according to an embodiment of the present disclosure. Referring to FIGS. 3 and 4, it may be seen that the bonding coating layer is constructed on the single-sided positive electrode, unlike in Comparative Example 1. Since the bonding coating layer including the first polymer binder is provided at at least a part of the outskirt part of the surface of the single-sided positive electrode, which faces the first separator, as described above, the degradation of the lifespan of a battery according to Li-precipitation and a resistance rise can be prevented although the electrode assembly is assembled at low pressure and temperature.

According to an embodiment of the present disclosure, the first separator 111 and the second separator 133 may be formed from one separator that has been folded in zigzags. Specifically, the one separator may be folded in zigzags at a predetermined interval. In this case, the first separator and the second separator are not separate and independent components, and are connected by one separator and the definitions thereof are merely different depending on their locations. The interval is not limited if the interval can prevent the positive electrode and the negative electrode from coming into contact with each other. It is preferred that the interval is a constant interval. The electrode is stacked in the state in which both surfaces of the electrode have been surrounded by the separator. The electrode may be bonded to a separator that neighbors the electrode according to thermal compression. When each of the positive electrode and the negative electrode is bonded to a separator that neighbors each electrode, this means that the electrode and the separator are bonded within a single electrode assembly. As described above, the first separator and the second separator are formed from one separator that has been folded in zigzags and manufactured in the zigzag stacking ways, and can implement a more stable electrode assembly.

According to an embodiment of the present disclosure, the area of the bonding coating layer 113 that is provided in the single-sided positive electrode 110 may be 10% or more to 20% or less with respect to the entire area of a surface of the single-sided positive electrode 110, which faces the first separator 111. Specifically, the area of the bonding coating layer that is provided in the single-sided positive electrode may be 10% or more to 20% or less, 11 % or more to 19% or less, 12 % or more to 18% or less, 13 % or more to 17 % or less, or 14 % or more to 16 % or less with respect to the entire area of the surface that faces the first separator in the single-sided positive electrode. By adjusting the area ratio of the bonding coating layer in the range, the occurrence of the curling of the single-sided positive electrode can be prevented, and the degradation of the lifespan of a battery according to Li-precipitation and a resistance rise of a portion can be prevented.

According to an embodiment of the present disclosure, the thickness of the bonding coating layer 113 may be 10% or more to 100% or less with respect to the thickness of the first separator 111. Specifically, the thickness of the bonding coating layer may be 15% or more to 95% or less, 20% or more to 90% or less, 25% or more to 85% or less, 30% or more to 80% or less, 35% or more to 75% or less, 40% or more to 70% or less, 45% or more to 65% or less, or 50% or more to 60% or less. By adjusting the thickness of the bonding coating layer with respect to the thickness of the first separator as described above, the assembly of the electrode assembly may be easy. The degradation of the lifespan of a battery according to Li-precipitation and a resistance rise can be prevented because the single-sided positive electrode and the first separator are uniformly bonded.

According to an embodiment of the present disclosure, the thickness of the bonding coating layer 113 may be 1 *µ*m or more to 20 *µ*m or less. Specifically, the thickness of the bonding coating layer may be 2 *µ*m or more to 19 *µ*m or less, 3 *µ*m or more to 18 *µ*m or less, 4 *µ*m or more to 17 *µ*m or less, 5 *µ*m or more to 16 *µ*m or less, 6 *µ*m or more to 15 *µ*m or less, 7 *µ*m or more to 14 *µ*m or less, 8 *µ*m or more to 13 *µ*m or less, 9 *µ*m or more to 12 *µ*m or less, or 10 *µ*m or more to 11 *µ*m or less. By adjusting the thickness of the bonding coating layer in the aforementioned range, the degradation of the lifespan of a battery according to Li-precipitation and a resistance rise can be prevented although the electrode assembly is assembled at low pressure and temperature because the thickness of the single-sided positive electrode is adjusted and the single-sided positive electrode also has bonding strength.

According to an embodiment of the present disclosure, the thickness of the first separator 111 may be 5 *µ*m or more to 30 *µ*m or less. Specifically, the thickness of the first separator may be 10 *µ*m or more to 25 *µ*m or less or 15 *µ*m or more to 20 *µ*m or less, and may be preferably 15 *µ*m. By adjusting the thickness of the first separator in the aforementioned range, the volume of the electrode assembly can be minimized, and the positive electrode and the negative electrode can be electrically insulated.

Moreover, the thickness of the second separator 133 may be the same as the thickness of the first separator 111. Furthermore, it is evident that the thicknesses of the first separator and the second separator are the same if the first separator and the second separator have been formed from one separator that has been folded in zigzags.

In an embodiment of the present disclosure, the thicknesses of the separator and the bonding coating layer may be measured by applying a contact type thickness measuring instrument. For example, VL-50S-B of Mitutoyo Corporation may be used as the contact type thickness measuring instrument.

According to an embodiment of the present disclosure, the entire surface of the single-sided positive electrode 110, which faces the first separator 111, may include the bonding coating layer 113 in a predetermined pattern. Referring to FIGS. 3 and 4, the bonding coating layer 113 that is provided on the single-sided positive electrode 110 forms a constant shape, but this is merely an example, and the present disclosure is not limited thereto. As the entire surface of the single-sided positive electrode, which faces the first separator, includes the bonding coating layer in the predetermined pattern as described above, bonding strength of the single-sided positive electrode and the first separator can be increased, the degradation of the lifespan of a battery according to Li-precipitation and a resistance rise can be prevented.

According to an embodiment of the present disclosure, the first polymer binder may be polyvinylidene-based resin. By selecting polyvinylidene-based resin as the first polymer binder as described above, the porosity of the first polymer binder can be maintained. After the activation of a battery, bonding strength can be maintained although the coating layer becomes wet by an electrolyte. Moreover, the stiffness of the battery can be improved, and the degradation of the lifespan of a battery according to Li-precipitation and a resistance rise can be prevented because the bending of the single-sided positive electrode is prevented.

According to an embodiment of the present disclosure, the first polymer binder may be a copolymer of polyvinylidenepropylene and hexafluoropropylene.

According to an embodiment of the present disclosure, in the first polymer binder, the replacement rate of hexafluoropropylene may be 20% or more. Specifically, in the first polymer binder, the replacement rate of hexafluoropropylene may be 20 wt% or more to 50 wt% or less, 25 wt% or more to 45 wt% or less, or 30 wt% or more to 40 wt% or less. By selecting 20% or more as the replacement rate of hexafluoropropylene as described above in the first polymer binder, bonding strength of the single-sided positive electrode and the first separator can be increased, the porosity of the separator can be maintained, and bonding strength can be maintained although the coating layer becomes wet by an electrolyte after the activation of a battery.

According to an embodiment of the present disclosure, the single-sided positive electrode includes a second polymer binder. The separator is provided on at least one surface of the single-sided positive electrode, and includes a porous coating layer including a third polymer binder and inorganic matter particles. Each of the second and third polymer binders included in the single-sided positive electrode the porous coating layer may be the same as the first polymer binder included in the bonding coating layer. By identically constructing the first polymer binder, the second polymer binder, and the third polymer binder as described above, the degradation of the lifespan of a battery according to Li-precipitation and a resistance rise can be prevented although the battery assembly is assembled at low pressure and temperature because bonding strength of the bonding coating layer and the single-sided positive electrode and the bonding coating layer and the first separator is increased.

According to an embodiment of the present disclosure, the electrode assembly 100 may be applied to an electrochemical device. The electrochemical device may be manufactured by inserting the electrode assembly into a pouch or a case, injecting an electrolyte, and then sealing the pouch or the case.

According to an embodiment of the present disclosure, the electrolyte may be a lithium salt-containing non-aqueous electrolyte. The electrolyte is composed of an electrolyte and a lithium salt. A non-aqueous organic solvent, an organic solid electrolyte, an inorganic solid electrolyte, etc. may be used for the electrolyte.

According to an embodiment of the present disclosure, a shape of the case or the pouch into which the electrode assembly is inserted is not limited. For example, the electrochemical device may be a cylindrical, prismatic, coin type, pouch type lithium secondary battery. The lithium secondary battery may be packed or modulated as a unit cell, and may be used in small-sized apparatuses such as a computer, a mobile phone, and a power tool and a power tool that is moved by power of a battery motor; electric vehicles including an electric vehicle (EV), a hybrid electric vehicle (HEV), a plug-in hybrid electric vehicle (PHEV), etc.; electric two-wheel vehicles including an electric bicycle (E-bike) and an electric scooter (E-scooter); an electric golf cart; and middle and large-sized apparatuses such as a system for power storage.

An embodiment of the present disclosure provides a method of manufacturing an electrode assembly, including steps of providing the 2n second separators 133 between the first separators 111 at both ends thereof; preparing a stack body in which the (n+1) negative electrodes 135 and the n positive electrodes 137 are alternately provided between the first separator 111 and the second separator 133 and the single-sided positive electrode 110 including the bonding coating layer 113 at the outskirt part thereof is provided on the first separator 111 at each of the both ends; and manufacturing the electrode assembly 100 by applying heat and pressure to the stack body. The same contents as the description of the electrode assembly, in descriptions relating to the method of manufacturing an electrode assembly, are replaced with the writing of the embodiment.

The method of manufacturing an electrode assembly according to an embodiment of the present disclosure can prevent the degradation of the lifespan of a battery according to Li-precipitation and a resistance rise because the electrode assembly is manufactured at low pressure and temperature, and can increase the ease of manufacturing because a battery manufacturing time is reduced.

According to an embodiment of the present disclosure, a step of providing the 2n second separators between the first separators at the both ends is included. The positive electrode and the negative electrode require the 2n second separators because the second separators are adjacently attached to both surfaces thereof.

According to an embodiment of the present disclosure, a unit electrode assembly may be formed by sequentially stacking each cut second separator in order of the second separator, the negative electrode, the second separator, the positive electrode, the second separator, the negative electrode, and the second separator (when n=1), but this is merely an example and the present disclosure is not limited thereto.

According to an embodiment of the present disclosure, a step of preparing the stack body in which the (n+1) negative electrodes and the n positive electrodes are provided to be alternated between the first separator and the second separator and the single-sided positive electrode is provided on the first separators at the both ends is included. Specifically, the thickness of the stack body may be 2 mm or more to 9.5 mm or less. Specifically, the thickness of the stack body may be 2.5 mm or more to 9 mm or less, 3 mm or more to 8.5 mm or less, 3.5 mm or more to 8 mm or less, 4 mm or more to 7.5 mm or less, 4.5 mm or more to 7 mm or less, or 5 mm or more to 6.5 mm or less. By adjusting the thickness of the stack body in the aforementioned range, all of the electrodes and the separators that constitute the stack body can implement uniform bonding strength according to thermal compression.

According to an embodiment of the present disclosure, a step of manufacturing the electrode assembly by applying heat and pressure to the stack body is included. Specifically, one unit electrode assembly may be manufactured by bonding the positive electrode and the separator and bonding the negative electrode and the separator by applying heat and pressure to the stack body. The thermal compression may include compressing the top and bottom of the stack body by using a press apparatus. The press apparatus is not limited to any type if the press apparatus can maintain the arrangement of the separator and the electrode included in the stack body and can bond the separator and the electrode by applying heat and pressure to one surface or both surfaces of the stack body at the same time or different times.

According to an embodiment of the present disclosure, a step of preparing the bonding coating layer including the first polymer binder at the outskirt part of the single-sided positive electrode may be further included before the step of preparing the stack body. By further including the step of preparing the bonding coating layer including the first polymer binder at the outskirt part of the single-sided positive electrode before the step of preparing the stack body as described above, the degradation of the lifespan of a battery according to Li-precipitation and a resistance rise can be prevented although the electrode assembly is assembled at low pressure and temperature because the single-sided positive electrode has bonding strength.

According to an embodiment of the present disclosure, the providing of the single-sided positive electrode including the bonding coating layer at the outskirt part on the first separator at each of the both ends in the step of preparing the stack body may include providing the single-sided positive electrode so that the first separator and the outskirt part face each other. By providing the single-sided positive electrode as described above, the degradation of the lifespan of a battery according to Li-precipitation and a resistance rise can be prevented although the electrode assembly is assembled at low pressure and temperature because the single-sided positive electrode has bonding strength.

According to an embodiment of the present disclosure, the step of manufacturing the electrode assembly may include assembling the electrode assembly with pressure less than 6.5 MPa at a temperature less than 90°C.

Specifically, the temperature may be 45°C or more to less than 90°C, 50°C or more to 85°C or less, 55°C or more to 85°Cor less, or 60°C or more to 85°C or less. Specifically, the pressure may be 3 MPa or more to less than 6.5 MPa, 3 MPa or more to 6.0 MPa or less, or 3 MPa or more to 5.5 MPa or less. When the temperature or the pressure is less than the range, the location of the electrode may not be fixed, and the electrodes may fall down from predetermined locations in a process of handling the stack body. When the temperature or the pressure is greater than the range, a problem may occur in the permeability of the separator and electrical resistance because the coating layer formed in the electrode may be broken or the pore structure formed in the separator may collapse.

By adjusting temperature and pressure conditions for the thermal compression in the aforementioned range, the degradation of the lifespan of a battery according to Li-precipitation and a resistance rise can be prevented because bonding strength of the separators and the electrodes that constitute the stack body is implemented without causing damage to the stack body.

According to an embodiment of the present disclosure, the step of providing the separator may include providing the separator while folding one separator in zigzags. Moreover, the stack body may be prepared by alternately disposing the positive electrode and the negative electrode between bent parts that have been formed while folding the separator in zigzags. The step of manufacturing the electrode assembly by applying heat and pressure to the stack body may be the same as the procedure.

### Mode for Invention

Hereinafter, Examples are described in detail in order to describe the present disclosure in detail. However, the Examples according to the present disclosure may be modified in various other forms, and the scope of the present disclosure is not construed as being limited to Examples described hereinafter. The Examples of this specification are provided to a person having ordinary knowledge in the art to more fully describe the present disclosure.

### <Example 1>

A separator having a thickness of 15 *µ*m on which slurry including an inorganic matter and a binder was coated was prepared. 30 positive electrodes each having a thickness of 100 *µ*m and 31 negative electrodes each having a thickness of 130 *µ*m were prepared. A positive electrode and a negative electrode were provided to be alternated between the separators while folding the separator in zigzags at intervals of 98.5 mm. A stack body was prepared by providing a single-sided positive electrode (a thickness of 60 *µ*m) including a bonding coating layer (a thickness of 5 *µ*m) on the separator at each of both ends thereof.

An electrode assembly was manufactured by disposing the stack body in the press apparatus and thermally compressing the stack body once at 60°C and pressure of 4.5 MPa for 20 seconds.

### <Example 2>

The same stack body as Example 1 was prepared.

An electrode assembly was manufactured by disposing the stack body in the press apparatus and thermally compressing the stack body once at 70°C and pressure of 5.5 MPa for 10 seconds.

### <Example 3>

The same stack body as Example 1 was prepared.

An electrode assembly was manufactured by disposing the stack body in the press apparatus and thermally compressing the stack body once at 85°C and pressure of 3.0 MPa for 10 seconds.

### <Comparative Example 1>

A stack body was prepared identically with Example 1 except that a single-sided positive electrode not including the bonding coating layer was used.

An electrode assembly was manufactured by disposing the stack body in the press apparatus and thermally compressing the stack body once at 90°C and pressure of 6.5 MPa for 20 seconds.

### <Comparative Example 2>

A stack body was prepared identically with Example 1 except that a single-sided positive electrode not including the bonding coating layer was used.

An electrode assembly was manufactured by disposing the stack body in the press apparatus and thermally compressing the stack body once at 60°C and pressure of 4.5 MPa for 20 seconds.

### <Experiment Example 1>

The processes of manufacturing the electrode assemblies manufactured in the Examples and the Comparative Examples, the time taken to manufacture the electrode assembly, and whether lithium(Li) was precipitated after the manufacturing were arranged in Table 1 below.

### <Experiment Example 2>

In electrical resistance, cells were manufactured by using the electrode assemblies manufactured in the Examples and the Comparative Examples. After the cells were left along at room temperature for one day, resistance of the separators of the electrode assemblies were measured by using an impedance measuring method. Measured resistance values (mΩ) were arranged in Table 1 below.

**[Table 1]**

| | Example 1 | Example 2 | Example 3 | Comparati ve Example 1 | Comparati ve Example 2 |
|---|---|---|---|---|---|
| Temperature (°C) | 60 | 70 | 85 | 90 | 60 |
| Pressure (MPa) | 4.5 | 5.5 | 3 | 6.5 | 4.5 |
| Manufacturing time (sec) | 20 | 10 | 10 | 20 | 20 |
| Resistance (mΩ) of separator | 1.30 | 1.35 | 1.30 | 2.10 | 2.80 |
| Whether Li was precipitated after manufacturing | X | X | X | X | O |

FIG. 2 is a schematic diagram of Li precipitation occurring in the single-sided positive electrode of Comparative Example 2. Referring to FIG. 2, it may be seen that Li-precipitation occurred if the bonding coating layer was not provided on the single-sided positive electrode and the battery was manufactured under weak conditions.

Meanwhile, FIG. 3 is a schematic diagram of the single-sided positive electrode including the bonding coating layer of Examples 1 to 3. FIG. 4 is a schematic diagram of the electrode assembly of Examples 1 to 3. Referring to FIGS. 3 and 4, it may be seen that Li-precipitation did not occur although the electrode assembly was assembled at low pressure and temperature because the bonding coating layer was provided in the single-sided positive electrode, unlike in the Comparative Examples.

### <Description of reference numerals>

10, 100: electrode assembly
11, 110: single-sided positive electrode
13, 130: unit electrode assembly
1, 111: first separator
113: bonding coating layer
3, 133: second separator
5, 135: negative electrode
7, 137: positive electrode

## Claims

1. An electrode assembly comprising a single-sided positive electrode provided at both ends thereof and a unit electrode assembly provided between the single-sided positive electrodes and comprising a first separator provided between the single-sided positive electrode and the unit electrode assembly,
wherein the unit electrode assembly comprises (n+1) negative electrodes and n positive electrodes alternately disposed between 2n second separators, wherein n is a positive integer, and
a bonding coating layer comprising a first polymer binder is provided at at least a part of an outskirt part of a surface of the single-sided positive electrode, which faces the first separator.

2. The electrode assembly of claim 1, wherein the first separator and the second separator are formed from one separator that has been folded in zigzags.

3. The electrode assembly of claim 1, wherein an area of the bonding coating layer provided in the single-sided positive electrode is 10% or more to 20% or less with respect to an entire area of the surface of the single-sided positive electrode, which faces the first separator.

4. The electrode assembly of claim 1, wherein a thickness of the bonding coating layer is 10% or more to 100% or less with respect to a thickness of the first separator.

5. The electrode assembly of claim 1, wherein an entire surface of the single-sided positive electrode, which faces the first separator, comprises the bonding coating layer in a predetermined pattern.

6. The electrode assembly of claim 1, wherein the first polymer binder is polyvinylidene-based resin.

7. The electrode assembly of claim 1, wherein the first polymer binder is a copolymer of polyvinylidenepropylene and hexafluoropropylene.

8. The electrode assembly of claim 1, wherein in the first polymer binder, a replacement rate of hexafluoropropylene is 20% or more.

9. The electrode assembly of claim 1, wherein:
the single-sided positive electrode comprises a second polymer binder,
the separator comprises a porous coating layer provided on at least one surface thereof and comprising a third polymer binder and inorganic matter particles, and
each of the second polymer binder and the third polymer binder provided in the single-sided positive electrode and the porous coating layer is identical with the first polymer binder included in the bonding coating layer.

10. A method of manufacturing an electrode assembly, comprising steps of:
providing 2n second separators between first separators at both ends;
preparing a stack body in which (n+1) negative electrodes and n positive electrodes are provided between the first separators and the second separators so that the (n+1) negative electrodes and the n positive electrodes are alternated and a single-sided positive electrode comprising a bonding coating layer is provided at an outskirt part on the first separator at each of the both ends; and
manufacturing an electrode assembly by applying heat and pressure to the stack body.

11. The method of claim 10, wherein the step of manufacturing the electrode assembly comprises assembling the electrode assembly at a temperature less than 90°C and pressure less than 6.5 MPa.

12. The method of claim 10, wherein the step of providing the separator comprises providing the separator while folding one separator in zigzags.
